# EUROPEAN PATENT SPECIFICATION

(11) **EP 2 742 786 B1**
(45) Date of publication and mention of the grant of the patent: **16.09.2015**
(21) Application number: 13195362.2
(22) Date of filing: 02.12.2013
(51) Int. Cl.: A01B 33/02

(54) **Tiller**
Fräser
Motoculteur

(30) Priority: 14.12.2012 JP 2012273485
(43) Date of publication of application: 18.06.2014
(73) Proprietor: Honda Motor Co., Ltd., Tokyo 107-8556 (JP)
(72) Inventor: Iino, Keiji, Saitama, 351-0193 (JP)
(74) Representative: Weickmann & Weickmann

(56) References cited:
- JP-A- H10 225 202
- JP-A- 2006 081 518
- US-A1- 2006 037 763
- US-B1- 7 096 970

## Description

The present invention relates to front-rotary-type tillers.

Front-rotary-type tillers have been popularly known, in which a rotary tilling operation section is disposed forward and downward of a power source. Of such front-rotary-type tillers, one in which an auxiliary wheel for adjusting a depth of plowing is disposed in front of the rotary tilling operation section is in wide practical use today (see, for example, JP 2006-81518 A).

In the tiller disclosed in JP 2006-81518 A, the rotary tilling operation section is disposed forward and downward of the power source, and the auxiliary wheel is provided via a pivot arm (or swing arm) in front of the rotary tilling operation section. Further, a pair of traveling wheels is disposed rearward and downward of the power source.

A handle is mounted on a pivot arm, and a locking state of the pivot arm is canceled by a human operator gripping the handle. With the pivot arm kept in the unlocked state, the human operator vertically pivots the auxiliary wheel together with the pivot arm to thereby adjust a height position of the auxiliary wheel. When the auxiliary wheel is at a low position of, the depth of plowing by tilling claws fixed to the rotary tilling operation section is set small. Conversely, when the auxiliary wheel is at a high position of, the depth of plowing by the tilling claws is set great.

When the depth of plowing is great, the tilling claws scrape up much soil or ground, in which case much of the scraped-up ground would stick to the pivot arm and the handle. Particularly, if the ground having stuck to the pivot arm and the handle contains much moisture content, the handle would become slippery. Therefore, a further improvement has to be made in order to allow a height adjusting operation to be performed on the auxiliary wheel with an enhanced operability.

JP H10-225202 A shows a tiller having fender, an auxiliary wheel, a pivot arm, and a lever having a grip at a distal end thereof. The auxiliary wheel is mounted on a distal end of the pivot arm, and the proximal end of the pivot arm is pivotably mounted on a machine frame via a horizontal shaft so that the pivot arm is pivotally movable in a vertical plane. The lever is connected to pivot arm via a rotary arm and an elevating/lowering adjusting linkage mechanism interposed therebetween. Thus, the lever is a separate part structurally independent from the pivot arm. The grip of the lever is located in a position far distant from the fender in a rearward direction adjacent to a grip of one handlebar extending rearwardly and upwardly from a rear part of the machine frame in a direction away from the fender.

In view of the foregoing prior art problems, it is an object of the present invention to provide an improved tiller which allows the height adjusting operation to be performed on the auxiliary wheel with an enhanced operability.

In order to accomplish the above-mentioned object, the present invention provides an improved tiller in accordance with claim 1.

The grip is provided on the lever in such a manner that the grip is located at a position higher than the auxiliary wheel when the pivot arm is located at its lowest pivotal position (or lowest pivotal-angle position) and that the grip is located immediately above the fender at least when the pivot arm is located at its highest pivotal position.

According to the present invention, when the pivot arm is located at its lowest pivotal position, the grip held by the human operator is located higher than the auxiliary wheel. Also, when the pivot arm is located at the lowest pivotal position, an amount of the soil splattered by the wheel is very small. With the grip located higher than the auxiliary wheel, the handle can be prevented from being dirtied with splattered soil, so that an operation for adjusting the height of the auxiliary wheel can be performed by the human operator with an enhanced operability.

The grip is provided on the lever in such a manner that, as the pivot arm pivots upward, the grip angularly moves, by way of the front of the fender, to a position immediately above the fender. Also, when the pivot arm is located at the highest pivotal position, a great amount of the soil is splattered by the rotary tilling operation section. However, with the grip located immediately above the fender, the grip can be effectively prevented from being dirtied with the splattered soil, so that the present invention allows the height adjusting operation to be performed on the auxiliary wheel with an enhanced operability.

Preferably, the tiller of the present invention further comprises: a lock mechanism for locking the pivot arm at a desired pivot angle (pivotal position) relative to the machine body; and an unlock mechanism for cancelling the locking, by the lock mechanism, of the pivot arm in response to the human operator performing an operation for pulling the pivot arm about a pivot axis, and the grip is disposed on or near an extension line extending from the pivot axis generally in a longitudinal direction of the pivot arm. With the grip disposed on or near the extension line extending from the pivot axis generally in the longitudinal direction of the pivot arm, the human operator holding the grip can readily recognize a current height of the pivot arm, and thus, the human operator can easily pivot the pivot arm while holding the grip.

Preferably, in the tiller of the present invention, the grip is oriented in a direction generally perpendicular to a direction in which an operation for pulling the pivot arm about the pivot axis is performed by the human operator. Thus, the human operator can readily intuitively know a direction in which the grip is to be operated, and thus, an even further enhanced operability can be achieved.

The following will describe embodiments of the present invention, but it should be appreciated that the present invention is not limited to the described embodiments and various modifications of the invention are possible without departing from the basic principles. The scope of the present invention is therefore to be determined solely by the appended claims.

Certain preferred embodiments of the present invention will hereinafter be described in detail, by way of example only, with reference to the accompanying drawings, in which:
Fig. 1 is a perspective view showing an embodiment of a tiller of the present invention;
Fig. 2 is a left side view of the tiller shown in Fig. 1;
Fig. 3 is an exploded perspective view of a depth-of-plowing adjustment mechanism shown in Fig. 2;
Fig. 4 is a left side view of the depth-of-plowing adjustment mechanism shown in Fig. 3;
Fig. 5 is a view explanatory of operations for unlocking and locking a pivot arm shown in Fig. 4;
Fig. 6 is a view explanatory of the operation for locking the pivot arm shown in Fig. 4;
Fig. 7 is a view explanatory of operational trajectories of the pivot art, a lever and an auxiliary wheel shown in Fig. 4; and
Fig. 8 is a view explanatory of behavior of the tiller shown in Fig. 1.

In the following description, the terms "front", "rear", "left", "right", "upward", "downward" etc. are used to refer to directions as viewed from a human operator operating a tiller of the present invention.

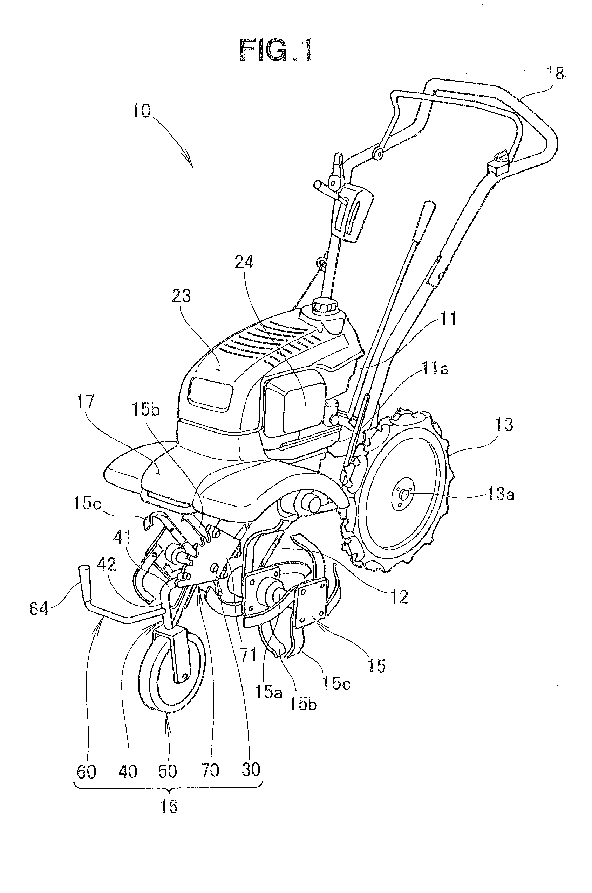

As shown in Fig. 1, an embodiment of the tiller 10 of the present invention is an agricultural machine in which power is transmitted from an engine 11, via a power transmission device 12 functioning as a machine body, to left and right traveling wheels 13 (only the left traveling wheel 13 is shown) and left and right rotary tilling operation sections 15 (only the left rotary tilling operation section 15 is shown) disposed in front of the left and right traveling wheels 13, and which tills the ground of an agricultural field by means of the rotary tilling operation sections 15.

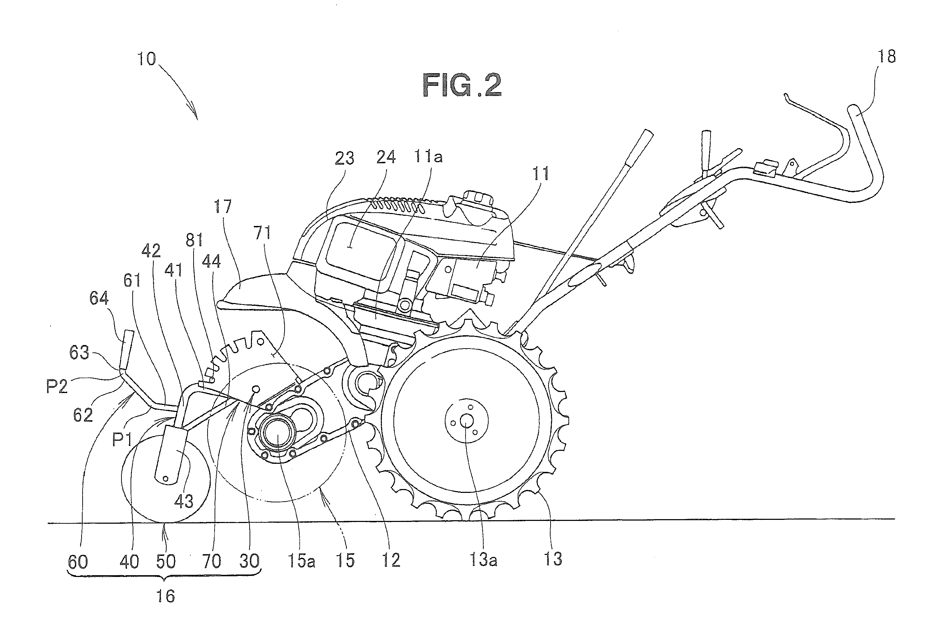

As shown in Fig. 2, the tiller 10 includes: the engine 11 disposed on an upper portion of the machine body; the power transmission device 12 connected to a lower portion of the engine 11 via a clutch (see a clutch case 11a); the left and right rotary tilling operation sections 15 rotatably connected to a front portion of the power transmission device 12 via left and right tilling shafts 15a (only the left tilling shaft 15a is shown); a depth-of-plowing adjustment mechanism 16 disposed in front of the rotary tilling operation sections 15 for adjusting a depth of plowing; a fender 17 formed in a generally rectangular shape as viewed from above (in top plan) in such a manner as to cover a substantially entire top portion of the left and right rotary tilling operation sections 15; the left and right traveling wheels 13 rotatably connected to a rear portion of the power transmission device 12 via left and right axles 13a (only the left axle 13a is shown); and a handle 18 extending obliquely rearward and upward from the rear portion of the power transmission device 12.

The engine 11 has an upper portion covered with an engine cover 23 but also has an air cleaner 24 attached to a side thereof.

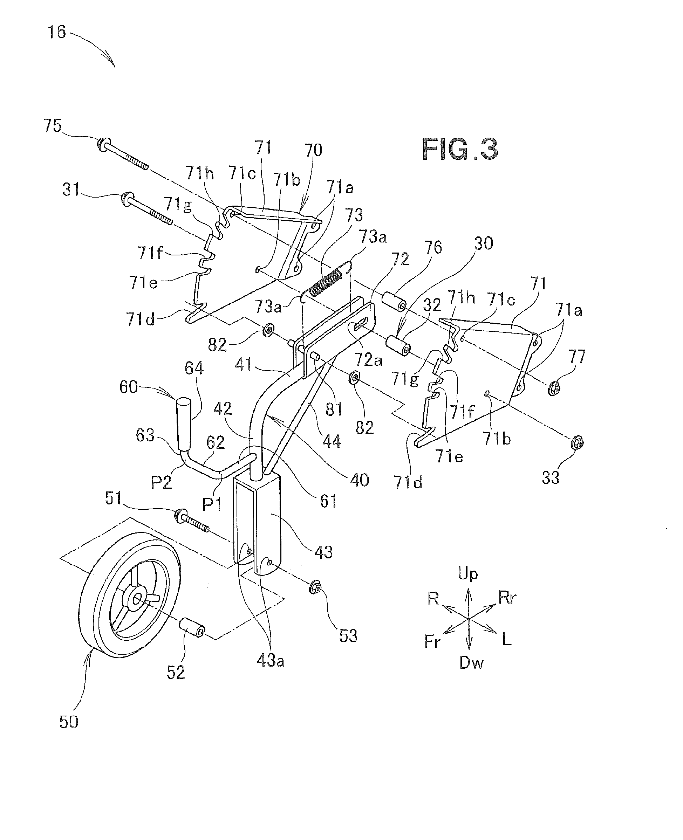

As shown in Figs. 1 and 2, each of the left and right rotary tilling operation sections 15 has a combination of a plurality of inner and outer tilling claws 15b and 15c. The inner tilling claws 15b and the outer tilling claws 15c rotate in opposite directions by means of the power transmission device 12. Details of the depth-of-plowing adjustment mechanism 16 will be discussed below with reference to Fig. 3.

As shown in Fig. 3, the depth-of-plowing adjustment mechanism 16 includes: a pivot arm (swing arm) 40 of a generally L shape vertically pivotably connected to a rotation shaft 30; an auxiliary wheel 50 rotatably connected to a distal end portion of the pivot arm 40; a lever 60 extending from the pivot arm 40 above the auxiliary wheel 50 and operable by the human operator to pivotally operate the pivot arm 40; and a lock/unlock mechanism 70 for switching between a locked state and an unlocked state of the pivot arm 40.

The rotation shaft 30 includes: a bolt 31; a collar 32 in which the bolt 31 is inserted and which supports the pivot arm 40; and a nut 33 screwed on a distal end portion of the bolt 31.

The pivot arm 40 integrally has a first arm section 41 located adjacent to the lock/unlock mechanism 70, and a second arm section 42 extending vertically from the first arm section 41. The second arm section 42 has an auxiliary wheel bracket 43 formed integrally at its distal end for supporting the auxiliary wheel 50. The auxiliary wheel bracket 43 has a generally vertically-inverted-U sectional shape opening downward and also has mounting holes 43a formed therein for mounting the auxiliary wheel 50. A reinforcing frame 44 extending obliquely between the distal end of the first arm section 41 and the second arm section 42 for increasing a strength of the pivot arm 40.

The auxiliary wheel 50 is rotatably supported by the auxiliary wheel bracket 43 by means of: a bolt 51 passed through the mounting holes 43a and a collar 52 that is in turn mounted in the center of the auxiliary wheel 50; and a nut 53 screwed on a distal end portion of the bolt 51.

The lever 60 is a member formed by bending a bar-shaped member at two points P1 and P2, so that it has: a proximal end section 61 extending generally horizontally from the second arm section 42; an intermediate section 62 extending obliquely from the distal end of the proximal end section 61; a distal end section 63 extending from the distal end of the intermediate section 62 in parallel to the second arm section 42; and a grip 64 formed of rubber put on a portion of the distal end section 63.

The proximal end section 61 extends in the same direction as the first arm section 41, and the distal end section 63 extends perpendicularly to the extending direction of the first arm section 41 and in a direction opposite from the auxiliary wheel bracket 43.

The lock/unlock mechanism 70 includes: a pair of left and right support brackets 71 each having a generally fan or sector shape; a base plate 72 disposed between the left and right support brackets 71 and surrounding the first arm section 41; and a spring 73 connected at its one end to the base plate 72 and normally urging the pivot arm 40 toward the rotation shaft 30.

The left and right support brackets 71 are interconnected via the rotation shaft 30. The left and right support brackets 71 are also interconnected via a bolt 75, a collar 76 in which the bolt 75 is inserted and which functions as a spacer, and a nut 77 screwed on a distal end portion of the bolt 75.

The left support bracket 71 has formed therein mounting holes 71a for mounting the depth-of-plowing adjustment mechanism 16 on the power transmission device 12 (Fig. 2), a bolt hole 71b for passage therethrough of the bolt 31, and a bolt hole 71c for passage therethrough of the bolt 75. Further, the left support bracket 71 has an arcuate section extending generally concentrically with the bolt hole 71b, and a plurality of locking recesses 71d to 71h formed in the arcuate section and extending radially inward toward the bolt hole 71b for locking the pivot arm 40 at a desired pivotal position (pivotal-angle position).

Similarly to the left support bracket 71, the right support bracket 71 has formed therein mounting holes 71a for mounting the depth-of-plowing adjustment mechanism 16 on the power transmission device 12, a bolt hole 71b for passage therethrough of the bolt 31, and a bolt hole 71c for passage therethrough of the bolt 75. Further, the left support bracket 71 has an arcuate section extending generally concentrically with the bolt hole 71b, and a plurality of locking recesses 71d to 71h formed in the arcuate section and extending radially inward toward the bolt hole 71b for locking the pivot arm 40 at a desired pivotal position (pivotal-angle position).

The base plate 72 has a generally U sectional shape opening upward, and the base plate 72 has an elongated hole 72a formed in its one end portion for passage therethrough of the collar 32 of the rotation shaft 30 and also has a pin 81 fixedly provided on its other end portion and extending through the other end portion to project leftward and rightward from the opposite side surfaces thereof. Washers 82 are fitted over opposite end portions of the pin 81 projecting outward from the opposite side surfaces of the base plate 72. The pin 81 is fittable in any desired one of the locking recesses 71d to 71h in response to a human operator's operation.

The spring 73 has hook-shaped opposite end portions 73a, and these hook-shaped end portions 73a are engaged respectively by the collar 32 of the rotation shaft 30 and the pin 81 fixed on the base plate 72.

With the elongated hole 72a, the base plate 72 is movable relative to the rotation shaft 30 within a predetermined range. Further, with the first arm section 41 fixed to the base plate 72, the pivot arm 40 is also movable relative to the rotation shaft 30 within the predetermined range.

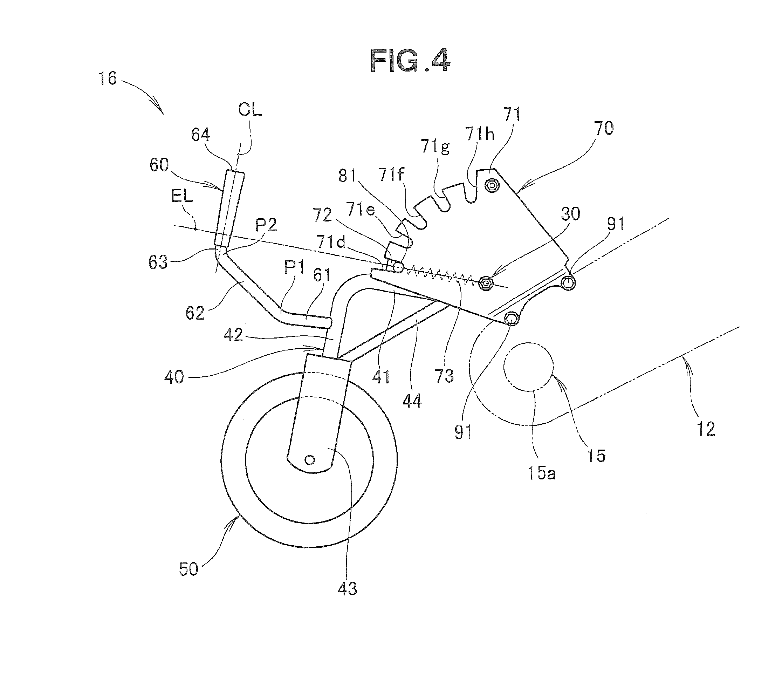

Note that the pivot arm 40 may be constructed in any desired manner as long as it is pivotably mounted directly or indirectly on the machine body (power transmission device 12). The following describe in detail, with reference to Fig. 4, the depth-of-plowing adjustment mechanism 16 in an assembled state. As shown in Fig. 4, the depth-of-plowing adjustment mechanism 16 is fixed to the power transmission device 12 by means of bolts 91. The pin 81 is normally fittingly engaged in any one of the locking recesses 71d to 71h by the biasing force of the spring 73.

In the lock/unlock mechanism 70, the support bracket 71 having the plurality of locking recesses 71d to 71h is mounted on the rotation shaft 30 about which the pivot arm 40 pivots. The spring 73 normally urging the pin 81 of the pivot arm 40 toward the rotation shaft 30 extends between the pin 81 and the rotation shaft 30, and the pivot arm 40 is locked by the pin 81 being fittingly engaged in any one of the locking recesses 71d to 71h with the biasing force of the spring 73. The grip 64 to be gripped by the human operator is disposed on an extension line EL interconnecting the rotation shaft 30 (pivot axis) and the pin 81 and extending beyond the pin 81, and the pin 81 is fittingly engageable in any one of the locking recesses 71d to 71h. The grip 64 extends perpendicularly to the extension line EL.

When the pin 81 is held fitted in any one of the locking recesses 71d to 71h, the pivot arm 40 cannot be pivoted; namely, the pivot arm 40 is kept in a locked state. In order to for the human operator to pivot such a pivot arm 40, it is necessary to first switch the pivot arm 40 from the locked state to an unlocked state, as detailed hereinbelow.

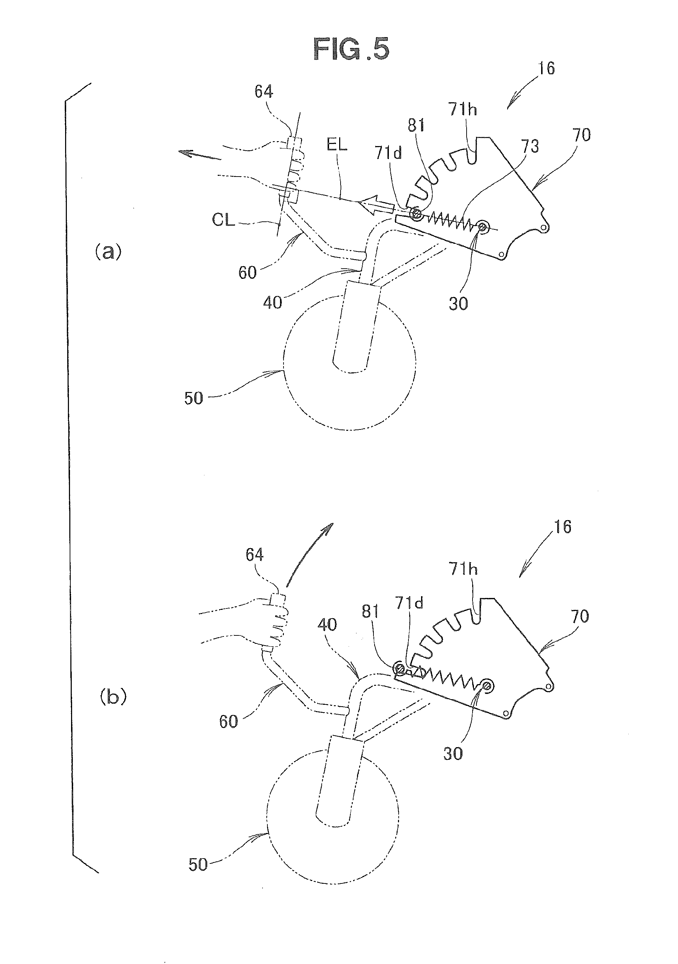

As shown in (a) of Fig. 5, the human operator pulls the grip 64 against the biasing spring of the spring 73 out of the fitting engagement with the locking recess (locking recess 71d in the figure). In the locked state, the grip 64 is disposed on the extension line EL interconnecting the rotation shaft 30 and the pin 81; namely, the grip 64 is disposed near the extension line EL extending from the rotation shaft 30 (pivot axis) generally in a longitudinal direction of the pivot arm 40.

Because the grip 64 and the pivot arm 40 are located close to each other, the human operator holding the grip 64 can readily recognize a current position of the pivot arm 40, and thus, the human operator can easily perform a pivoting operation of the pivot arm 40 while holding the grip 64.

Further, the axis line CL of the grip 64 is oriented or extends perpendicularly to the extension line EL, and the grip 64 is oriented or extends generally perpendicularly to a direction in which the human operator pulls the grip 64, i.e. performs a grip pulling operation, as indicated by a thick solid-line arrow. Because the human operator only has to pull the grip 64 in a direction perpendicular to the direction in which the grip 64 is oriented, the human operator can readily intuitively know a direction in which the grip 64 is to be operated, and thus, an enhanced operability can be achieved.

As shown in (b) of Fig. 5, after the pin 81 gets out of fitting engagement with the locking recess 71d, the human operator pivots the pivot arm 40 about the rotation shaft 30.

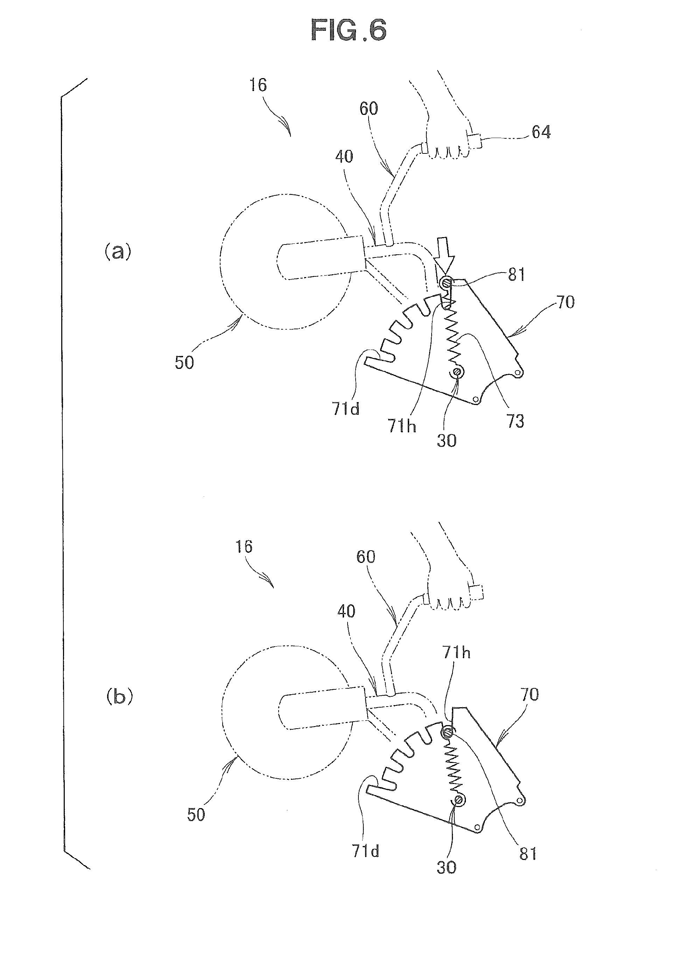

As shown in (a) of Fig. 6, the human operator pivots the pivot arm 40 to a desired position and then puts the pin 81 into fitting engagement with another of the locking recesses (locking recess 71h in the figure) that corresponds to the desired position. In order to put the pin 81 into fitting engagement with the locking recesses 71h, the human operator only has to weaken the force pulling the grip 64 because the returning biasing force acts in such a direction where the pin 81 is put into fitting engagement with the locking recesses 71h.

Thus, as shown in (b) of Fig. 6, the pin 81 is put into fitting engagement with the locking recesses 71h, and, thus, the pivoting operation of the pivot arm 40 is completed. In (b) of Fig. 6, the auxiliary wheel 50 is located at its highest position. With the auxiliary wheel 50 located at the highest position like this, the rotary tilling operation section 15 (Fig. 2) can till the solid at the deepest position.

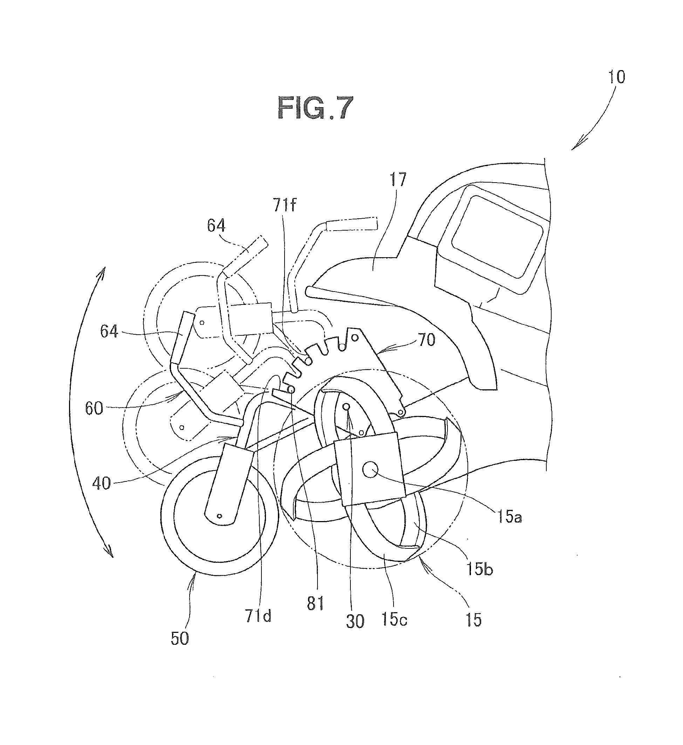

Further, when the pin 81 is held fitted in the lowest locking recess 71d as shown in Fig. 7, the auxiliary wheel 50 too is located at its lowest position. With the auxiliary wheel 50 located at the lowest position like this, the rotary tilling operation section 15 does not touch the ground. Thus, when the tiller 10 should move without tilling the soil, it is caused to move with the rotary tilling operation section 15 lifted above (i.e., out of contact with) the ground.

Further, with the pivot arm 40 located at its lowest pivotal position, the grip 64 is located higher than the auxiliary wheel 50. When the pivot arm 40 is located at the lowest pivotal position like this, an amount of the soil splattered by the rotary tilling operation section 15 is very small. With the grip 64 located higher than the auxiliary wheel 50, the handle 64 can be prevented from being dirtied with splattered soil, so that the human operator can vertically pivot the auxiliary wheel 50 with an enhanced operability.

When the pin 81 is held fitted in the locking recess 71f, the depth-of-plowing of the rotary tilling operation section 15 is small. In this case too, the amount of the soil splattered by the rotary tilling operation section 15 is small. If the grip 64 is located higher than the auxiliary wheel 50, the handle 64 can be prevented from being dirtied with splattered soil, so that the human operator can vertically pivot the auxiliary wheel 50.

As the pivot arm 40 pivots upward, the grip 64 angularly moves, by way of the front of the fender 17, to a position immediately above the fender 17. When the pivot arm 40 is located at the highest pivotal position, the grip 64 is located not only over the fender 17 but also within a width range of the fender 17 as viewed from above the tiller 10.

Positional relationship among the fender 17, the rotary tilling operation section 15 and the grip 64 is set such that, at least when the pivot arm 40 is located at the highest pivotal position, the positional relationship satisfies both 1) the condition that the grip 64 is located on an opposite side from the rotary tilling operation section 15 with respect to the fender 17 and 2) the condition that the grip 64 is located rearward of an imaginary line contacting a rotational trajectory of the outer periphery of the rotary tilling operation section 15 and passing the front end of the fender 17.

Namely, when the pivot arm 40 is located at the highest pivotal position, the grip 64 provided on the lever 60 is located on the opposite side from the rotary tilling operation section 15 with respect to the fender 17 and rearward of the imaginary straight line contacting the rotational trajectory of the outer periphery of the rotary tilling operation section 15 and passing the front end of the fender 17.

Note that examples of the posture of the tiller 10 "as viewed from above" includes various postures that would be taken when the depth-of-plowing is in the range of 0 - max (at least a posture that would be taken when the pivot arm 40 is located at the highest pivotal position).

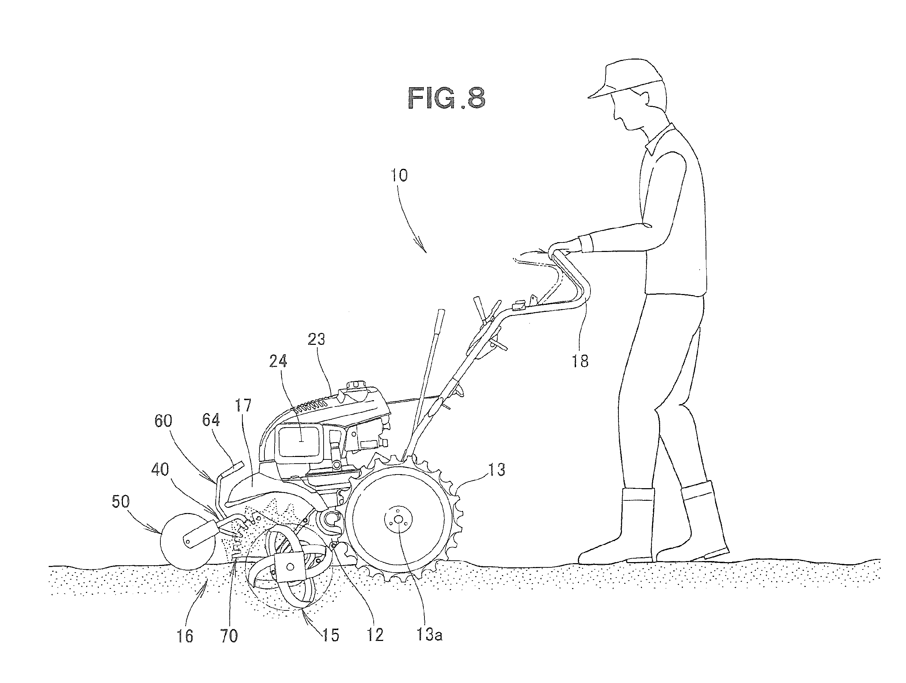

When the pivot arm 40 is located at the highest pivotal position, as shown in Fig. 8, a great amount of the soil is splattered by the rotary tilling operation section 15. However, because the grip 64 is located immediately above the fender 17, the grip 64 can be effectively prevented from being dirtied with the splattered soil, so that the instant embodiment allows the height adjusting operation to be performed on the auxiliary wheel 50 with an enhanced operability.

It should be appreciated that the lever 60 may be formed in a generally U sectional shape as viewed in side elevation such that the grip 64 can angularly move while reliably bypassing the fender 17. Further, the grip 64 may have a loop shape or a generally U shape rather than being limited to a bar shape.

The tiller of the present invention is well suited for application to tillage of various fields.

A tiller (10) includes: a rotary tilling operation section (15) whose upper portion covered with a fender (17); an auxiliary wheel (50) provided in front of the rotary tilling operation section (15); and a pivot arm (40) vertically pivotably mounted on a machine body (12) for adjusting a height of the auxiliary wheel. The pivot arm (40) includes a lever (60) operable in a vertical direction by a human operator holding a grip (64) when a pivotal angle of the pivot arm is to be adjusted. The grip (64) is provided on the lever in such a manner that the grip is located higher than the auxiliary wheel (50) when the pivot arm (40) is located at its lowest pivotal position, and the grip (64) is located immediately above the fender (17) at least when the pivot arm is located at its highest pivotal position.

## Claims

1. A tiller (10) comprising a rotary tilling operation section (15) whose upper portion is covered with a fender (17); an auxiliary wheel (50) disposed in front of the rotary tilling operation section (15) for adjusting a depth of plowing; and a pivot arm (40) pivotably mounted on a machine body (12) to undergo pivotal movement in a vertical plane for adjusting a height of the auxiliary wheel (50),
**characterized in that** the pivot arm (40) includes a lever (60) mounted thereon and comprising a grip (64) operable in a vertical direction by a human operator for adjusting the angle of the pivot arm (40), and
**in that** the grip (64) is provided on the lever (60) in such a manner that the grip (64) is located at a position higher than the auxiliary wheel (50) when the pivot arm (40) is located at a lowest pivotal position thereof and that the grip (64) is located immediately above the fender (17) at least when the pivot arm (40) is located at a highest pivotal position thereof.

2. The tiller according to claim 1, further comprising a lock mechanism (70) for locking the pivot arm (40) at a desired pivot angle relative to the machine body (12); and
an unlock mechanism (70) for cancelling the locking, by the lock mechanism, of the pivot arm (40) in response to the human operator performing an operation for pulling the pivot arm about a pivot axis (30),
wherein the grip (64) is disposed on or near an extension line (EL) extending from the pivot axis (30) generally in a longitudinal direction of the pivot arm (40).

3. The tiller according to claim 2, wherein the grip is oriented in a direction generally perpendicular to a direction in which the pulling operation of the pivot arm (40) is performed by the human operator.

## Patentansprüche

1. Fräse (10), welche aufweist: einen rotierenden Fräsenarbeitsabschnitt (15), dessen oberer Abschnitt mit einer Abdeckung (17) abgedeckt ist; ein Hilfsrad (50), das vor dem rotierenden Fräsenarbeitsabschnitt (15) angeordnet ist, um eine Pflügtiefe einzustellen; und einen Schwenkarm (40), der an einem Maschinenkörper (12) schwenkbar angebracht ist, so dass er einer Schwenkbewegung in einer vertikalen Ebene zum Einstellen einer Höhe des Hilfsrads (50) unterliegt,
**dadurch gekennzeichnet, dass** der Schwenkarm (40) einen Hebel (60) enthält, der daran angebracht ist und einen Griff (64) aufweist, der von einer Bedienungsperson in vertikaler Richtung bedienbar ist, um den Winkel des Schwenkarms (40) einzustellen, und
dass der Griff (64) an dem Hebel (60) derart vorgesehen ist, dass der Griff (64) in einer höheren Position als das Hilfsrad (50) angeordnet ist, wenn der Schwenkarm (40) an seiner untersten Schwenkposition ange-ordnet ist, und dass der Griff (64) unmittelbar oberhalb der Abdeckung (17) angeordnet ist, zumindest dann, wenn der Schwenkarm (40) an seiner höchsten Schwenkposition angeordnet ist.

2. Die Fräse nach Anspruch 1,
die ferner einen Verriegelungsmechanismus (70) aufweist, um den Schwenkarm (40) an einem gewünschten Schwenkwinkel relativ zum Maschinenkörper (12) zu verriegeln; und
einen Entriegelungsmechanismus (70) zum Lösen der Verriegelung durch den Verriegelungsmechanismus des Schwenkarms (40) in Antwort darauf, dass die Bedienungsperson eine Bedienung zum Ziehen des Schwenkarms um eine Schwenkachse (30) herum durchführt, wobei der Griff (64) an oder in der Nähe einer Erstreckungslinie (EL) angeordnet ist, die sich von der Schwenkachse (30) allgemein in Längsrichtung des Schwenkarms (40) erstreckt.

3. Die Fräse nach Anspruch 2,
wobei der Griff in einer Richtung allgemein senkrecht zu einer Richtung orientiert ist, in der die Ziehbedienung des Schwenkarms (40) von der Bedienungsperson durchgeführt wird.

## Revendications

1. Rotoculteur (10) comprenant une section rotative d'opération de labourage (15) dont la portion supérieure est couverte par un garde-boue (17) ; une roue auxiliaire (50) disposée devant la section rotative d'opération de labourage (15) afin de régler une profondeur de sillon ; et un bras de pivot (40) monté avec faculté de pivotement sur un châssis de machine (12) afin de subir un mouvement pivotant dan un plan vertical pour régler une hauteur de la roue auxiliaire (50),
**caractérisé en ce que** le bras de pivot (40) comprend un levier (60) monté sur celui-ci et comprenant une poignée (64) opérationnelle dans une direction verticale par un opérateur humain afin de régler l'angle du bras de pivot (40), et
**en ce que** la poignée (64) est agencée sur le levier (60) d'une manière telle que la poignée (64) est située à une position plus haute que la roue auxiliaire (50) lorsque le bras de pivot (40) est situé à une position de pivot la plus basse et que la poignée (64) est située immédiatement au-dessus du garde-boue (17) au moins lorsque le bras de pivot (40) est situé à une position de pivot la plus haute de celui-ci.

2. Rotoculteur selon la revendication 1, comprenant en outre un mécanisme de verrouillage (70) destiné à verrouiller le bras de pivot (40) à un angle de pivot souhaité par rapport au châssis de machine (12); et
un mécanisme de déverrouillage (70) destiné à supprimer le verrouillage, par le mécanisme de verrouillage, du bras de pivot (40) en réponse à la réalisation par un opérateur humain d'une opération de traction du bras de pivot autour d'un axe de pivot (30),
dans lequel la poignée (64) est disposée sur ou à proximité d'une ligne d'extension (EL) s'étendant à partir de l'axe de pivot (30) généralement dans une direction longitudinale du bras de pivot (40).

3. Rotoculteur selon la revendication 2, dans lequel la poignée est orientée dans une direction généralement perpendiculaire à une direction dans laquelle l'opération de traction du bras de pivot (40) est réalisée par l'opérateur humain.
